# EUROPÄISCHE PATENTSCHRIFT

(11) **EP 1 654 142 B1**
(45) Veröffentlichungstag und Bekanntmachung des Hinweises auf die Patenterteilung: **23.05.2007**
(21) Anmeldenummer: 05728250.1
(22) Anmeldetag: 15.02.2005
(51) Int. Cl.: B60R 21/20

(54) **GEHÄUSE FÜR EIN GASSACKMODUL**
HOUSING FOR AN AIRBAG MODULE
BOITIER POUR MODULE DE SAC A GAZ

(30) Priorität: 18.02.2004 US 545172 P; 18.02.2004 DE 102004008557; 20.10.2004 DE 102004051434
(43) Veröffentlichungstag der Anmeldung: 10.05.2006
(73) Patentinhaber: Takata-Petri AG, 63743 Aschaffenburg (DE)
(72) Erfinder: BATHON, Petra, 63834 Sulzbach (DE); HANS, Andreas, 63843 Niedernberg (DE); HAUCK, Hans-Martin, 64380 Rossdorf (DE); SAKAGUCHI, Takashi, 63776 Mömbris (DE); MÜLLER, Norbert, 63743 Aschaffenburg (DE)
(74) Vertreter: Baumgärtel, Gunnar
(86) Internationale Anmeldenummer: PCT/DE2005/000269
(87) Internationale Veröffentlichungsnummer: WO 2005/080143

(56) Entgegenhaltungen:
- EP-A- 0 523 882
- DE-A1- 19 829 238
- DE-A1- 19 927 024
- DE-U1- 20 106 693
- US-A- 3 819 205

## Beschreibung

Die Erfindung betrifft ein Gehäuse für ein Gassackmodul gemäß Anspruch 1.

Es ist bekannt, Gassackmodulgehäuse im Zentrum eines Lenkradskeletts durch Einrasten zu befestigen. Zur Auslösung des Fahrzeughorns (Hupe) ist dem Gehäuse eine separate Hornplatte zugeordnet, die zumeist mit Schrauben schwimmend im Zentrum des Lenkradskeletts angeordnet ist. Die Auslösung des Fahrzeughorns erfolgt dann durch Druckbeaufschlagung des Gehäuses, wodurch dieses in axialer Richtung ins Zentrum des Lenkradskeletts ausgelenkt wird.

Nachteilig an diesen Konzepten ist jedoch, dass sowohl eine großflächige Hornplatte benötigt wird und gleichzeitig die Hornplatte zur Auslösung des Fahrzeughorns in axialer Richtung bewegt werden muss, wodurch die Beaufschlagungskraft hoch und der nötige Betätigungsweg relativ groß ist.

In der galtungsgemässen DE 199 27 024 A1 wird ein Gehäuse für ein Gassackmodul zur Anordnung an einem Lenkrad eines Kraftfahrzeuges beschrieben. Das Gehäuse weist ein Scharniermittel auf, an dem ein Betätigungselement einer Hupe schwenkbar gelagert ist. An dem Gehäuse ist ein Kontaktmittel vorgesehen, mit dem bei einer Verschwenkung des Betätigungselementes der Hupe um das Scharniermittel ein Fahrzeughorn ausgelöst wird.

Der Erfindung liegt das Problem zugrunde, ein Gehäuse für ein Gassackmodul bereitzustellen, dass der Auslösung eines Fahrzeughorns dient und sich durch eine kompakte Bauweise sowie einen kurzen Betätigungsweg auszeichnet.

Erfindungsgemäß wird dieses Problem durch die Merkmale des Anspruchs 1 gelöst.

Ein erfindungsgemäßes Gehäuse für ein Gassackmodul zur Anordnung am Lenkrad eines Kraftfahrzeuges sieht mindestens ein Scharniermittel zur schwenkbaren Befestigung des Gehäuses an einem Lenkrad und mindestens ein Befestigungsmittel zur zusätzlichen schwimmenden Lagerung des Gehäuses an dem Lenkrad vor, wobei das Scharniermittel und das Befestigungsmittel an voneinander beabstandeten Stellen angeordnet sind. Weiterhin weist das Gehäuse ein Kontaktmittel zur Auslösung eines Fahrzeughorns auf, das an einer vom Scharniermittel beabstandeten Stelle angeordnet ist, wobei das schwimmend gelagerte Gehäuse zur Auslösung des Fahrzeughorns durch Druckbeaufschlagung um das Scharniermittel schwenkbar ist. Erfindungsgemäß weist das Gehäuse mindestens ein Zentriermittel zur Zentrierung des Gehäuses am Lenkrad auf. Dadurch wird eine stabile Anordnung des erfindungsgemäßen Gehäuses am Lenkrad gewährleistet. Die schwimmende Lagerung des Gehäuse wird durch das Befestigungsmittel und mindestens ein Federelement erreicht.

Das erfindungsgemäße Gehäuse realisiert durch die Anordnung des Kontaktmittels direkt am Gehäuse eine kompakte Bauweise die Auslösung eines Fahrzeughorns bei einem sehr kurzen Betätigungsweg und geringer Druckbeaufschlagung durch den Fahrer eines Kraftfahrzeuges, die sich wiederum aus der Schwenkbarkeit des Gehäuses um die Scharniermittel ergibt. Mit dem erfindungsgemäßen Gehäuse kann ein Betätigungsweg von höchstens einen Millimeter, insbesondere 0,5 bis 0,3 Millimeter zur Auslösung des Fahrzeughorns realisiert werden.

Das Schamiermittel kann an der Speiche eines Lenkrades angeordnet sein, und zwar insbesondere an einem der Lenkradnabe benachbarten Bereich einer Lenkradspeiche. Auf Grund des sich daraus ergebenden kurzen Hebelwegs ermöglicht diese Maßnahme einen kurzen Betätigungsweg für die Auslösung der Hupe.

Das Befestigungsmittel, das beispielsweise als Rasthaken ausgebildet sein kann, ist vorteilhafterweise im Bereich der Nabe des Lenkrads angeordnet. Dies erlaubt eine einfache Befestigung des Gehäuses im Bereich der Lenkradnabe durch Einrasten in einer dafür im Lenkrad vorgesehenen Öffnung.

Das als Rasthaken ausgebildete Befestigungsmittel dient der Befestigung des Gehäuses an einem Lenkrad durch Einrasten. Gleichzeitig wird durch mindestens ein Federelement, das zwischen dem Gehäuse und dem Lenkrad angeordnet ist, eine Kraft ausgeübt, die in entgegengesetzter Richtung auf das Gehäuse und das Lenkrad einwirkt. Dies ermöglicht es, dass die Hupenfunktion durch das erfindungsgemäße Gehäuse ausgeübt werden kann.

In einer vorteilhaften Ausgestaltung der Erfindung ist das am Gehäuse angeordnete Kontaktmittel als Kontaktplatte ausgebildet, die an der der Lenkradnabe in Montageposition zugewandten Seite des Gehäuses angeordnet sein kann. Mit besonderem Vorteil ist die Kontaktplatte hufeisenförmig bzw. U-förmig ausgebildet, wodurch die Form der Kontaktplatte an die Form des Gehäuses angepasst ist. Dadurch wird eine zuverlässige Auslösung des Fahrzeughorns gewährleistet.

Das Problem wird auch durch ein Lenkrad für ein Kraftfahrzeug mit einem erfindungsgemäßen Gehäuse für ein Gassackmodul gelöst. Zur schwimmenden Lagerung des Gehäuses am Lenkrad greift das Befestigungsmittel des Gehäuses in eine im Bereich der Lenkradnabe angeordnete Öffnung einrastbar ein, wobei das Gehäuse auf mindestens einem im Bereich der Lenkradnabe angeordneten Federelement aufliegt.

Das Scharniermittel ist vorteilhafter Weise in einem der Lenkradnabe zugeordneten Bereich an einer Lenkradspeiche angeordnet. Das Gehäuse somit durch Druckbeaufschlagung um das Scharniermittel in Richtung zur Nabe des Lenkrads hin schwenkbar.

Ebenso kann das eine Zentriermittel im Bereich der Lenkradnabe in ein Lagerelement des Lenkrades eingreifen, um das Spiel des Gehäuses zu verringern.

Durch das Schwenken des Gehäuses ist die am Gehäuse angeordnete Kontaktplatte zur Auslösung des Horns mit einem im Bereich der Lenkradnabe angeordneten Hornkabel in Kontakt bringbar.

Die Erfindung soll in einem Ausführungsbeispiel anhand von Zeichnungen erläutert werden. Es zeigen:
- Figur 1A -: eine perspektivische Ansicht eines an einem Lenkrad angeordneten Gehäuses für ein Gassackmodul als Teil einer Vorrichtung zur Betätigung eines Fahrzeughorns;
- Figur 1B -: die Anordnung nach Figur 1 A von der entgegengesetzten Seite;
- Figur 2A -: eine Draufsicht auf das an einem Lenkrad angeordnete Gehäuse für ein Gassackmodul;
- Figur 2B -: eine Schnittansicht der in Figur 2A gezeigten Anordnung entlang der Achse A-A;
- Figur 2C -: eine Schnittansicht der in der Figur 2A gezeigten Vorrichtung entlang der Achse B-B;
- Figur 3 -: eine Explosionszeichnung einer im Zentrum eines Lenkradskeletts anzuordnenden Vorrichtung zur Betätigung eines Fahrzeughorns;
- Figur 4 -: ein Lenkradskelett, in das eine Vorrichtung zur Betätigung eines Fahrzeughorns mit einem Gehäuse für ein Gassackmodul integriert werden kann;
- Figur 5 -: eine Schnittansicht durch ein Gehäuse für ein Gassackmodul, das im Zentrum eines Lenkradskeletts montiert ist.

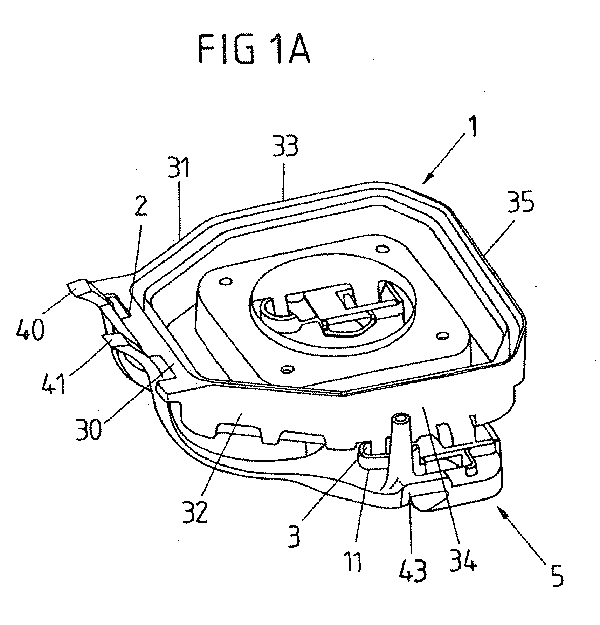

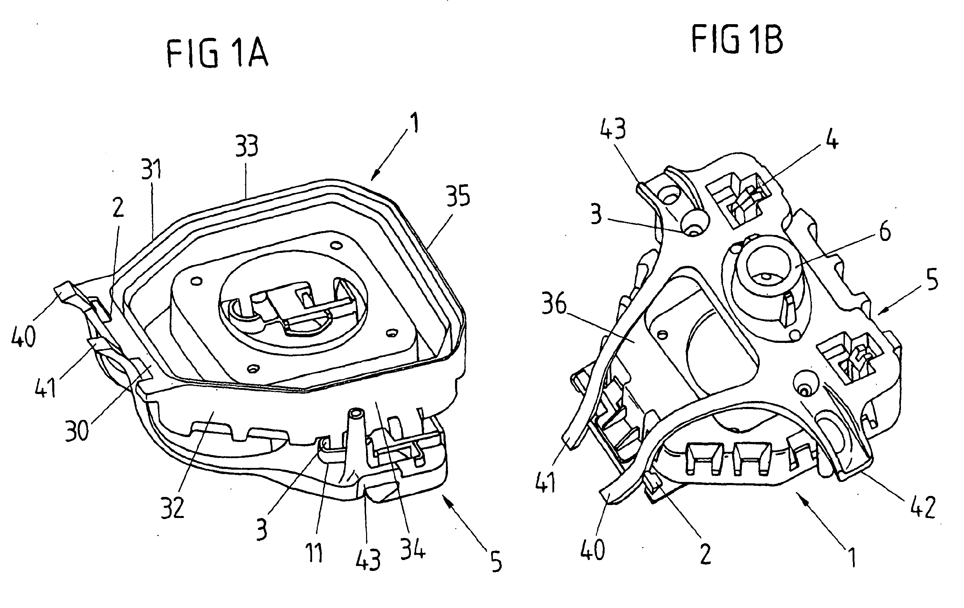

Die Figuren 1A und 1B zeigen ein an einem Lenkrad 5 angeordnetes Gehäuse 1 für ein Gassackmodul zur Anordnung am Lenkrad eines Kraftfahrzeuges aus entgegengesetzten Perspektiven.

Das schalenförmige Gehäuse 1 weist eine Basisplatte 36 mit einem seitlich abstehenden Rand auf, der sich entlang der gesamten Basisplatte 36 umlaufend erstreckt und sechs Seitenflächen 30, 31, 32, 33, 34, 35 definiert. An eine ersten Seitenfläche 30 des Gehäuses 1, an der zwei Scharniermittel 2 zur schwenkbaren Befestigung des Gehäuses 1 an einem Lenkrad 5 angeordnet sind, schließen sich zwei in symmetrischer Weise voneinander weg verlaufende Seitenfläche an, nämlich eine zweite Seitenfläche 31 und eine dritte Seitenfläche 32 die in eine vierte 33 und fünfte 34 Seitenfläche übergehen, die ihrerseits durch eine der ersten Seitenfläche 30 parallel gegenüberliegende sechste Seitenfläche 35 verbunden werden.

Das in Figur 1A gezeigte Lenkrad 5, an dem das Gehäuse 1 angeordnet ist, weist vier Speichen 40, 41, 42, 43 auf, wobei jeweils eine erste 40 und eine zweite 41 Speiche im Wesentlichen der sogenannten 6-Uhr Position angeordnet sind, also in einer eine Geradeausfahrt des Kraftfahrzeugs ermöglichenden Position des Lenkrades 5 im Fahrzeug im Wesentlichen nach unten, in Richtung zu einem Fahrer weisen. Eine dritte Speiche 42 (in Figur 1A nicht sichtbar) ist in der 10-Uhr Position und eine vierte Speiche 43 in der 2-Uhr Position angeordnet.

Weiterhin ist in Figur 1A erkennbar, dass das Gehäuse 1 für ein Gassackmodul mittels der an der ersten Seitenfläche 30 angeordneten Scharniermittel 2 an der ersten 40 und zweiten 41 Speiche des Lenkrads 5 schwenkbar gelagert ist.

An den sich gegenüberliegenden vierten 33 und fünften 34 Seitenfläche des Gehäuses 1 ist jeweils ein Zentriermittel 3 zur Zentrierung des Gehäuses 1 am Lenkrad 5 angeordnet. Das jeweilige Zentriermittel 3 ist hier als Zapfen ausgeformt, wobei jeder Zapfen in ein im Zentrum des Lenkrades 5 angeordnetes Lagerelement 11 eingreift.

Gemäß der Figur 1 B sind darüber hinaus im Bereich der sechsten Seitenfläche 35 am Boden des Gehäuses 1 Befestigungsmittel 4 zur schwimmenden Lagerung des Gehäuses 1 am Lenkrad 5 angeordnet, die hier als Rasthaken 4 in Kombination mit Federelementen 15 ausgebildet sind. Jeweils ein Rasthaken 4 ist nach dem Durchführen durch eine im Zentrum des Lenkrades 5 angeordnete Öffnung in einer an der Unterseite des Lenkrades 5 angeordnete Ausnehmung einrastbar. Dadurch wird das Gehäuse 1 im Bereich der Nabe 6 des Lenkrads 5 auf der dem Fahrer eines Kraftfahrzeuges zugewandten Seite des Lenkrades 5 angeordnet.

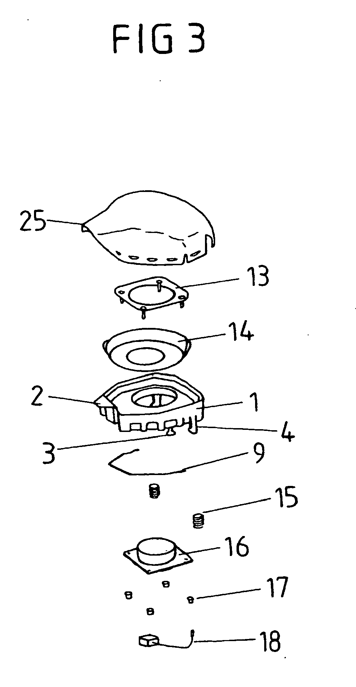

Die schwimmende Festlegung des Gehäuses 1 ergibt sich durch die Anordnung von zwei Federelementen 15 zwischen der Basisplatte 36 des Gehäuses 1 und dem Bereich der Nabe 6 des Lenkrads 5 in dem Bereich des Gehäuses 1, an dem auch die Rasthaken 4 angeordnet sind. Die Anordnung der Federelemente 15 wird weiter unten anhand der Figur 3 deutlich werden.

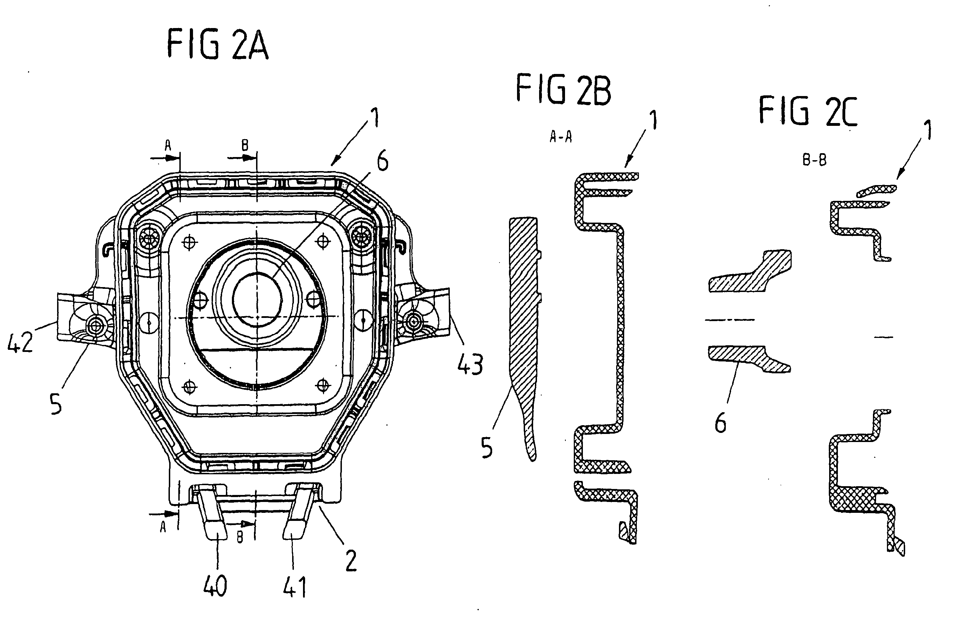

Figur 2A zeigt eine Draufsicht auf die bereits in Figur 1 gezeigte Ausführungsform eines Gehäuses 1 für ein Gassackmodul, angeordnet an einem Lenkrad 5, wobei alle vier Speichen 40, 41, 42, 43 des Lenkrads 5 erkennbar sind. Weiterhin ist der Figur zu entnehmen, dass die Basisplatte 36 des Gehäuses eine runde Öffnung aufweist, die über der Nabe 6 des Lenkrads 5 angeordnet ist. Durch diese Öffnung ist ein Gasgenerator zur Befüllung eines Gassackes steckbar. Der Gassack ist ebenfalls am Gehäuse 1 befestigbar, was Figur 3 entnommen werden kann.

Ausgehend von der Figur 2A zeigt Figur 2B eine Schnittansicht gemäß der Achse A-A und Figur 2C eine Schnittansicht gemäß der Achse B-B, also durch die Lenkradnabe 6. Die Figuren 2B und 2C verdeutlichen, dass das Gehäuse 1 nicht auf dem Lenkrad 5 direkt aufliegt. Vielmehr ist das Gehäuse 1 an den ersten und zweiten Speiche 40 und 41 schwenkbar am Lenkrad 5 gelagert und aufgrund der schwimmenden Lagerung durch Druckbeaufschlagung in Richtung zur Bereich der Nabe 6 des Lenkrads 5 auslenkbar.

Figur 3 zeigt eine Vorrichtung zur Betätigung eines Fahrzeughorns in einer Explosionszeichnung mit einem Gehäuse 1 für ein Gassackmodul. Beim Zusammenbau dieser Vorrichtung wird ein Gassack 14 mit seiner Einströmöffnung auf die zentrale Öffnung des Gehäuses 1 aufgesetzt und darauf mit einem Rückhaltering 13 unter Verwendung geeigneter Befestigungsmittel fixiert. Zum Fahrer hin wird die Vorrichtung mittels einer oberen Abdeckung 25 überspannt.

An der dem Gassack 14 entgegengesetzten Seite der Basisplatte 36 des Gehäuses 1 wird eine, in dieser Ausführungsform hufeisenförmige Kontaktplatte 9 angeordnet. Dabei erstreckt sich jeweils ein seitlicher Schenkel der Kontaktplatte 9, an dem ein das Horn (die Hupe) auslösender Kontakt hergestellt werden kann, von der die Scharniermittel 2 aufweisenden Seite des Gehäuses in Richtung des als Rasthaken 4 ausgeformten Befestigungsmittels 4 innerhalb eines Randbereiches der Basisplatte 36 des Gehäuses. Der die seitlichen Schenkel der Kontaktplatte 9 verbindende mittlere Bereich der Kontaktplatte 9 ist im Bereich der Scharniermittel 2 an der Basisplatte 36, also im Bereich der ersten Seitenfläche des Gehäuses 1 angeordnet.

Zur schwimmenden Festlegung des Gehäuses 1 am Lenkrad 5 ruht das Gehäuse 1 an dem den Scharniermitteln 2 gegenüberliegenden Bereich auf Federelementen 15 in Form von Hornfedern, die ihrerseits in einem zentralen Bereich des Lenkrads 5 aufliegen. Wie oben bereits beschrieben wird das Gehäuse 1 mittels der Rasthaken 4 im Zentrum des Lenkrads 5 eingerastet. In die zentrale Öffnung des Gehäuses 1 ragt aus Richtung der Nabe 6 des Lenkrads 5 ein (bevorzugt einstufig ausgebildeter) Gasgenerator 16 zur Befüllung des Gassackes 14 im Crashfall. Dieser Gasgenerator 16 wird mittels mindestens einer Nut 17 am Lenkrad 5 befestigt. Weiterhin ist im zentralen Bereich des Lenkrades 5 ein stromführendes Hornkabel 18 zur Auslösung der Hupe angeordnet, dass in Richtung der Kontaktplatte 9 nach oben ragt.

Eine Druckbeaufschlagung der oberen Abdeckung 25 entgegen der durch die Federelemente 15 erzeugten Federkraft durch einen Fahrer des Kraftfahrzeugs bewirkt eine schwenkende Auslenkung des Gehäuses 1 um die Scharniermittel 2 in Richtung des zentralen Bereichs des Lenkrades 5. Dadurch wird die am Gehäuse 1 angeordnete Kontaktplatte 9 mit ihren seitlichen Schenkeln mit dem stromführenden Hornkabel 18 in Kontakt gebracht und das Fahrzeughorn ausgelöst.

Die eigentliche Hupenfunktion erfolgt demgemäss nicht an der in 6-Uhr-Position angeordneten ersten 40 und zweiten 41 Speiche des Lenkradskeletts 5, sondern in dem im Wesentlichen gegenüberliegenden Bereich des Gehäuses 1, insbesondere entlang der vierten 33 und fünften Seitenfläche 34 des Gehäuses 1, an dem die Kontaktplatte 9 angeordnet ist. Die Kontaktplatte 9 kommt durch Druckbeaufschlagung mit im Bereich der Nabe 6 des Lenkrads 5 angeordneten und mit verbundenen Nieten 17 in Kontakt, wobei die Nieten 17 durch eine Verbindung mit einem Horn-Kabel 18 stromführend sind.

Nach der Beendigung der Druckbeaufschlagung wird der Kontakt durch die Rückstellkräfte der Federelemente 15 und das dadurch bewirkte Zurückschwenken des das Gehäuse 1 um die Scharniermittel 2 nach oben, also in Richtung des Fahrers des Kraftfahrzeugs wieder unterbrochen und das Hornsignal erlischt.

Mit der oben beschriebenen Anordnung des Gehäuse 1 in geringem Abstand zum zentralen Bereich des Lenkrads 5, in dem das zur Auslösung des Horns benötigte Hornkabel 18 angeordnet ist, kann der zur Auslösung des Horns nötige Betätigungsweg verringert werden, da der Hebelweg durch die Anordnung des Gehäuses mittels Scharniermittel minimiert werden kann. Somit ist ein Betätigungsweg von weniger als einem Millimeter, insbesondere 0,5 bis 0,3 Millimeter erzielbar.

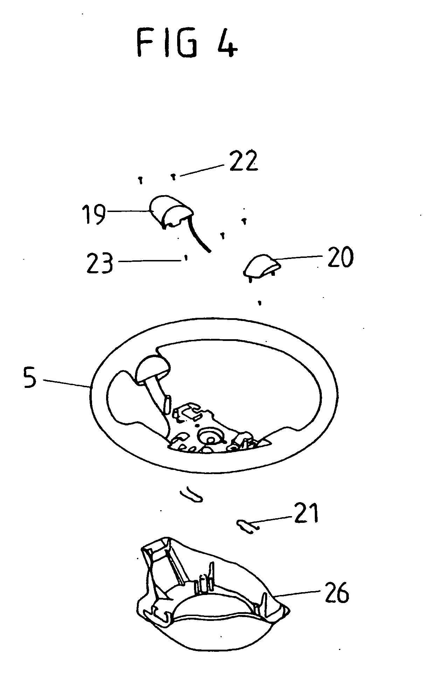

Figur 4 zeigt ein Lenkradskelett 5, in dessen zentralem Bereich nach dem Zusammenbau die in Figur 3 gezeigte Vorrichtung zur Betätigung eines Fahrzeughorns eingebaut werden kann. Dazu wird die in Figur 3 gezeigte Vorrichtung mittels zweier seitlich in eine Öffnung des Gehäuses 1 einschiebbares Rückhaltemittel 21 am Lenkrad 5 befestigt. In Richtung zur Längssäule wird die Vorrichtung dann mit einer unteren Abdeckung 26 abgedeckt.

Zur Komplettierung des Lenkrades 5 werden dann bei der gezeigten Ausführungsform auf der oberen Seite der Vorrichtung mittels Schrauben 22 sowohl ein Multifunktionsschalter zur Bedienung diverser im Kraftfahrzeug angeordneter Vorrichtungen, als auch ein Speichenmodul 20 angeordnet, womit dann ein für den Einbau in einem Kraftfahrzeug geeignetes Lenkrad 5 vorliegt.

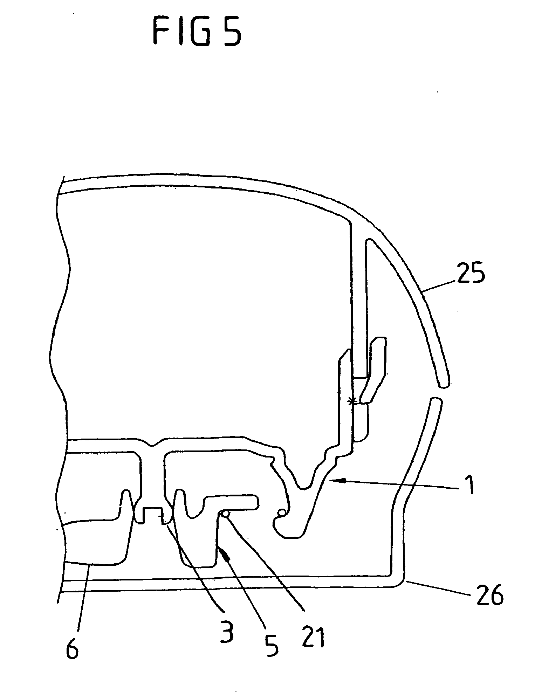

Eine Schnittansicht durch eine in einem Lenkrad 5 montierte Vorrichtung zur Betätigung eines Fahrzeughorns mit einem erfindungsgemäßen Gehäuse 1 ist in einer Schnittansicht in Figur 5 dargestellt. Das Gehäuse 1 für ein Gassackmodul ist mittels eines Zentriermittels 3 in Form mindestens eines Zentrierelementes am Lenkrad 5 zentriert, wobei das Zentriermittel 3 in eine der Lenkradnabe 6 angeordnete Öffnung eingreift. Weiterhin ist erkennbar, dass das Gehäuse 1 mittels eines Rückhaltemittels 21 am Lenkrad 5 befestigt ist. Die Vorrichtung zur Betätigung eines Fahrzeughorns wird durch eine obere Abdeckung 25 und eine untere Abdeckung 26 umschlossen.

## Patentansprüche

1. Gehäuse für ein Gassackmodul zur Anordnung am Lenkrad eines Kraftfahrzeuges, mit
- mindestens einem Scharniermittel (2) zur schwenkbaren Lagerung des Gehäuses (1) an einem Lenkrad (5) und
- mindestens einem Befestigungsmittel (4) zur zusätzlichen schwimmenden Lagerung des Gehäuses (1) an dem Lenkrad (5),
wobei das Scharniermittel (2) und das Befestigungsmittel (4) an voneinander beabstandeten Stellen des Gehäuses (1) angeordnet sind, sowie
- einem Kontaktmittel (9) zur Auslösung eines Fahrzeughorns, das an einer vom Scharniermittel (2) beabstandeten Stelle angeordnet ist,
wobei das schwimmend gelagerte Gehäuse (1) zur Auslösung des Fahrzeughorns durch Druckbeaufschlagung um das Scharniermittel (2) schwenkbar ist,
**dadurch gekennzeichnet, dass**
- zur Zentrierung des Gehäuses (1) am Lenkrad (5) mindestens ein Zentriermittel (3) am Gehäuse (1) vorgesehen ist und
- die schwimmende Lagerung des Gehäuses durch das Befestigungsmittel (4) und mindestens ein Federelement (15) erfolgt.

2. Gehäuse nach mindestens einem der vorangehenden Ansprüche, **dadurch gekennzeichnet, dass** das Befestigungsmittel (4) als Rasthaken (4) ausgebildet ist.

3. Gehäuse nach mindestens einem der vorangehenden Ansprüche, **dadurch gekennzeichnet, dass** das Kontaktmittel als Kontaktplatte (9) ausgebildet ist.

4. Gehäuse nach Anspruch 3, **dadurch gekennzeichnet, dass** die Kontaktplatte (9) an der Seite des Gehäuses (1) angeordnet ist, die in Montageposition der Lenkradnabe (6) zugewandt ist.

5. Gehäuse nach Anspruch 3 oder 4, **dadurch gekennzeichnet, dass** die Kontaktplatte (9) hufeisenförmig ausgebildet ist.

6. Lenkrad mit einem Gehäuse (1) für ein Gassackmodul nach mindestens einem der Ansprüche 1 bis 5 für ein Kraftfahrzeug.

7. Lenkrad nach Anspruch 6, **dadurch gekennzeichnet, dass** zur schwimmenden Lagerung des Gehäuses (1) am Lenkrad (5) das Befestigungsmittel (4) des Gehäuses (1) in eine im Bereich der Lenkradnabe (6) angeordnete Öffnung einrastbar eingreift und das Gehäuse (1) auf mindestens einer im Bereich der Lenkradnabe (6) angeordneten Federelement (15) aufliegt.

8. Lenkrad nach Anspruch 6 oder 7, **dadurch gekennzeichnet, dass** das Scharniermittel (2) in einem der Lenkradnabe (6) zugeordneten Bereich an einer Lenkradspeiche (40, 41) angeordnet ist.

9. Lenkrad nach einem der vorangehenden Ansprüche 6 bis 8, **dadurch gekennzeichnet, dass** das mindestens eine Zentriermittel (3) im Bereich der Lenkradnabe (6) in ein Lagerelement (11) des Lenkrades (5) eingreift.

10. Lenkrad nach einem der vorangehenden Ansprüche 6 bis 9, **dadurch gekennzeichnet, dass** das Gehäuse (1) durch Druckbeaufschlagung um das Scharniermittel (2) in Richtung zur Lenkradnabe (6) hin schwenkbar ist.

11. Lenkrad nach einem der vorangehenden Ansprüche 6 bis 10, **dadurch gekennzeichnet, dass** durch das Schwenken des Gehäuses (1) die am Gehäuse (1) angeordnete Kontaktplatte (9) zur Auslösung des Horns mit einem im Bereich der Lenkradnabe (6) angeordneten Hornkabel (18) in Kontakt bringbar ist.

## Claims

1. Housing for an airbag module for arranging on the steering wheel of a motor vehicle, with
- at least one hinge means (2) for pivotably mounting the housing (1) on a steering wheel (5), and
- at least one fastening means (4) for the additional floating mounting of the housing (1) on the steering wheel (5),
the hinge means (2) and the fastening means (4) being arranged at points of the housing (1) that are spaced apart from each other, and
- a contact means (9) for triggering a vehicle horn, which contact means is arranged at a point spaced apart from the hinge means (2),
the housing (1) mounted in a floating manner being pivotable about the hinge means (2) in order to trigger the vehicle horn by pressure being applied,
**characterized in that**
- at least one centering means (3) is provided on the housing (1) for centering the housing (1) on the steering wheel (5), and
- the floating mounting of the housing takes place by the fastening means (4) and at least one spring element (15).

2. Housing according to at least one of the preceding claims, **characterized in that** the fastening means (4) is designed as a latching hook (4).

3. Housing according to at least one of the preceding claims, **characterized in that** the contact means is designed as a contact plate (9).

4. Housing according to Claim 3, **characterized in that** the contact plate (9) is arranged on that side of the housing (1) which, in the installation position, faces the steering wheel hub (6).

5. Housing according to Claim 3 or 4, **characterized in that** the contact plate (9) is of horseshoe-shaped design.

6. Steering wheel with a housing (1) for an airbag module according to at least one of Claims 1 to 5 for a motor vehicle.

7. Steering wheel according to Claim 6, **characterized in that** for the floating mounting of the housing (1) on the steering wheel (5) the fastening means (4) of the housing (1) engages in a latachable manner in an opening arranged in the region of the steering wheel hub (6) and the housing (1) rests on at least one spring element (15) arranged in the region of the steering wheel hub (6).

8. Steering wheel according to Claim 6 or 7, **characterized in that** the hinge means (2) is arranged on a steering wheel spoke (40, 41) in a region assigned to the steering wheel hub (6).

9. Steering wheel according to one of the preceding Claims 6 to 8, **characterized in that** the at least one centering means (3) in the region of the steering wheel hub (6) engages in a bearing element (11) of the steering wheel (5).

10. Steering wheel according to one of the preceding Claims 6 to 9, **characterized in that** the housing (1) can be pivoted about the hinge means (2) in the direction of the steering wheel hub (6) by pressure being applied.

11. Steering wheel according to one of the preceding Claims 6 to 10, **characterized in that** the pivoting of the housing (1) enables the contact plate (9) arranged on the housing (1) to be brought into contact with a horn cable (18) arranged in the region of the steering wheel hub (6), to trigger the horn.

## Revendications

1. Boîtier pour un module de sac à gaz destiné à l'utilisation sur le volant d'un véhicule automobile avec
- au moins un élément de charnière (2) pour le montage basculant du boîtier (1) sur un volant (5) et
- au moins un élément de fixation (4) pour le montage flottant supplémentaire du boîtier (1) sur le volant (5),
dans lequel l'élément à charnière (2) et l'élément de fixation (4) sont disposés en des emplacements séparés entre eux du boîtier (1), ainsi que
- un élément de contact (9) pour le déclenchement d'un klaxon de véhicule qui est disposé en un emplacement séparé de l'élément à charnière (2),
dans lequel le boîtier (1) monté de façon flottante pour le déclenchement du klaxon du véhicule par impact de pression peut pivoter autour de l'élément à charnière (2),
**caractérisé en ce que**
- pour le centrage du boîtier (1) sur le volant (5), est prévu au moins un élément de centrage (3) sur le boîtier (1) et
- le montage flottant du boîtier s'effectue par l'élément de fixation (4) et au moins un élément à ressort (15).

2. Boîtier selon au moins l'une des revendications précédentes, **caractérisé en ce que** l'élément de fixation (4) est configuré en forme de crochet d'encliquetage (4).

3. Boîtier selon au moins l'une des revendications précédentes, **caractérisé en ce que** l'élément de contact est configuré en tant que plaque de contact (9).

4. Boîtier selon la revendication 3, **caractérisé en ce que** la plaque de contact (9) est disposée sur le côté du boîtier (1) qui, dans la position de montage, est dirigé vers le moyeu du volant (6).

5. Boîtier selon la revendication 3 ou 4, **caractérisé en ce que** la plaque de contact (9) est configurée en fer à cheval.

6. Volant comportant un boîtier (1) pour un module de sac à gaz selon au moins l'une des revendications 1 à 5 pour un véhicule automobile.

7. Volant selon la revendication 6, **caractérisé en ce que**, pour le montage flottant du boîtier (1) sur le volant (5), l'élément de fixation (4) du boîtier (1) coopère à encliquetage dans une ouverture disposée dans la zone du moyeu de volant (6) et le boîtier (1) s'appuie sur au moins un élément à ressort (15) disposé dans la zone du moyeu de volant (6).

8. Volant selon la revendication 6 ou 7, **caractérisé en ce que** l'élément à charnière (2) est disposé dans une zone affectée au moyeu de volant (6) dans un rayon de volant (40, 41).

9. Volant selon l'une des revendications précédentes 6 à 8, **caractérisé en ce que** le au moins un élément de centrage (3) coopère au niveau du moyeu de volant (6) dans un élément de boîtier (11) du volant (5).

10. Volant selon l'une des revendications précédentes 6 à 9, **caractérisé en ce que** le boîtier (1) peut basculer par impact de pression autour de l'élément à charnière (2) dans la direction du moyeu de volant (6).

11. Volant selon l'une des revendications précédentes 6 à 10, **caractérisé en ce que**, par basculement du boîtier (1), la plaque de contact (9), disposée sur le boîtier (1) pour le déclenchement du klaxon, peut être mise en contact avec un câble de klaxon (18) disposé au niveau du moyeu de volant (6).
